# EUROPEAN PATENT SPECIFICATION

(11) **EP 2 325 581 B1**
(45) Date of publication and mention of the grant of the patent: **26.06.2013**
(21) Application number: 10250789.4
(22) Date of filing: 16.04.2010
(51) Int. Cl.: F25B 13/00, F25B 47/02, F28F 21/02

(54) **Air conditioner**
Klimaanlage
Climatiseur

(30) Priority: 13.11.2009 KR 20090109893
(43) Date of publication of application: 25.05.2011
(73) Proprietor: LG Electronics Inc., Youngdungpo-ku Seoul (KR)
(72) Inventor: Ko, Young Hwan, Kyungsangnam-do 641-110 (KR); Ryu, Byoung Jin, Kyungsangnam-do 641-110 (KR); Lee, Eung Yu, Kyungsangnam-do 641-110 (KR); Kim, Bum Suk, Kyungsangnam-do 641-110 (KR)
(74) Representative: Palmer, Jonathan R.

(56) References cited:
- EP-A1- 1 696 196
- EP-A2- 1 598 610
- WO-A1-99/51919
- JP-A- 2004 251 557
- US-A1- 2003 116 503
- US-A1- 2009 241 573

## Description

### BACKGROUND OF THE INVENTION

### 1. Field of the Invention

The present invention relates to an air conditioner, and more particularly, to an air conditioner in which a defrost operation for defrosting an outdoor heat exchanger is unnecessary while performing a heating operation.

### 2. Description of the Related Art

In general, an air conditioner is an apparatus for cooling or heating indoor using a refrigeration cycle including a compressor, an outdoor heat exchanger, an expansion device, and an indoor heat exchanger and is formed as an air conditioner for cooling indoor or is formed as an air conditioner (i.e., a heat pump) for both cooling and heating for cooling or heating indoor.

When the air conditioner is formed as an air conditioner for both cooling and heating, the air conditioner may include a cooling/heating switching valve (i.e., 4-way valve) for changing a flow path of a compressed refrigerant in a compressor according to a cooling operation and a heating operation. In the air conditioner, when performing a cooling operation, as a refrigerant compressed in the compressor sequentially passes through a cooling/heating switching valve, an outdoor heat exchanger, an expansion device, an indoor heat exchanger, and the cooling/heating switching valve and is circulated to the compressor, the outdoor heat exchanger operates as a condenser and the indoor heat exchanger operates as an evaporator. In the air conditioner, when performing a heating operation, as a refrigerant compressed in the compressor sequentially passes through a cooling/heating switching valve, an indoor heat exchanger, an expansion device, an outdoor heat exchanger, and the cooling/heating switching valve and is circulated to the compressor, the indoor heat exchanger operates as a condenser and the outdoor heat exchanger operates as an evaporator.

In a such air conditioner, water is generated on a surface of a heat exchanger operating as an evaporator while the air conditioner operates. In a case of a cooling operation, water is generated on a surface of the indoor heat exchanger, and in a case of a heating operation, water is generated on a surface of the outdoor heat exchanger. Particularly, when condensate water generated on a surface of the outdoor heat exchanger is frozen, smooth flow of outdoor air and heat exchange are disturbed, and thus heating performance is deteriorated.

When the air conditioner stops a heating operation while performing a heating operation and operates a refrigeration cycle to an inverse cycle (i.e., a cooling operation), a refrigerant of a high temperature and a high pressure passes through the outdoor heat exchanger, and frost of a surface of the outdoor heat exchanger is melted by heat of the refrigerant. After all frost of a surface of the outdoor heat exchanger by an inverse cycle of the refrigeration cycle is removed, if the refrigeration cycle is operated again to a heating operation, warm air is discharged to indoor.

EP 1 598 610 discusses control of a continuous heating operation in a heat pump system, and a system according to the preamble of claim 1.

### SUMMARY OF THE INVENTION

The present invention has been made in an effort to solve the above problems, and the present invention provides an air conditioner that can perform continuously heat with an indoor heat exchanger while defrosting an outdoor heat exchanger.

According to an aspect of the present invention, there is provided an air conditioner as set out in claim 1.

The air conditioner may further include a CNT heater module/second expansion device bypass flow path for connecting between the cooling/heating switching valve and the CNT heater module and between the outdoor heat exchanger and the second expansion device.

The air conditioner may further include a check valve installed in the CNT heater module/the second expansion device bypass flow path to block a refrigerant not to flow from between the outdoor heat exchanger and the second expansion device to between the cooling/heating switching valve and the CNT heater module.

The air conditioner may further include a second expansion device bypass flow path for connecting between the second expansion device and the CNT heater module and the CNT heater module/the second expansion device bypass flow path.

The air conditioner may further include a check valve installed in the second expansion device bypass flow path to block a refrigerant not to flow from between the second expansion device and the CNT heater module to the second expansion device bypass flow path.

The defrost condition may be a condition for allowing a piping temperature of the outdoor heat exchanger to a setting temperature or less while performing a heating operation.

The controller may initialize the second expansion device to a defrost initial opening degree and adjust an opening degree of the second expansion device under a defrost condition of the air conditioner.

The air conditioner may further include: a compressor inhalation temperature sensor for detecting an inhalation temperature of the compressor; and a CNT heater module inlet temperature sensor for detecting an inlet temperature of the CNT heater module, wherein the controller may adjust an opening degree of the second expansion device so that a difference between an inhalation temperature of the compressor and an inlet temperature of the CNT heater module reaches a target inhalation superheat temperature.

The controller may adjust an opening degree of the second expansion device at a second expansion device opening change setting time interval.

The controller may determine the turned-on number of a plurality of CNT heaters at a CNT heater module change setting time interval.

### BRIEF DESCRIPTION OF THE DRAWINGS

The present invention will become more fully understood from the detailed description given herein below and the accompanying drawings, which are given by illustration only, and thus are not limitative of the present invention, and wherein:
FIG. 1 is a schematic diagram illustrating a refrigerant flow when performing a cooling operation of an air conditioner according to an exemplary embodiment of the present invention;
FIG. 2 is a schematic diagram illustrating a refrigerant flow when performing a heating operation of an air conditioner according to an exemplary embodiment of the present invention;
FIG. 3 is a schematic diagram illustrating a refrigerant flow when performing a defrost operation of an air conditioner according to an exemplary embodiment of the present invention;
FIG. 4 is an enlarged cross-sectional view of a CNT heater module shown in FIGS. 1 to 3;
FIG. 5 is a block diagram illustrating a control process of an air conditioner according to an exemplary embodiment of the present invention; and
FIG. 6 is a flowchart illustrating a method of operating an air conditioner according to an exemplary embodiment of the present invention.

### DESCRIPTION OF THE PREFERRED EMBODIMENT

Hereinafter, an exemplary embodiment of an air conditioner according to the present invention will be described with reference to the accompanying drawings.

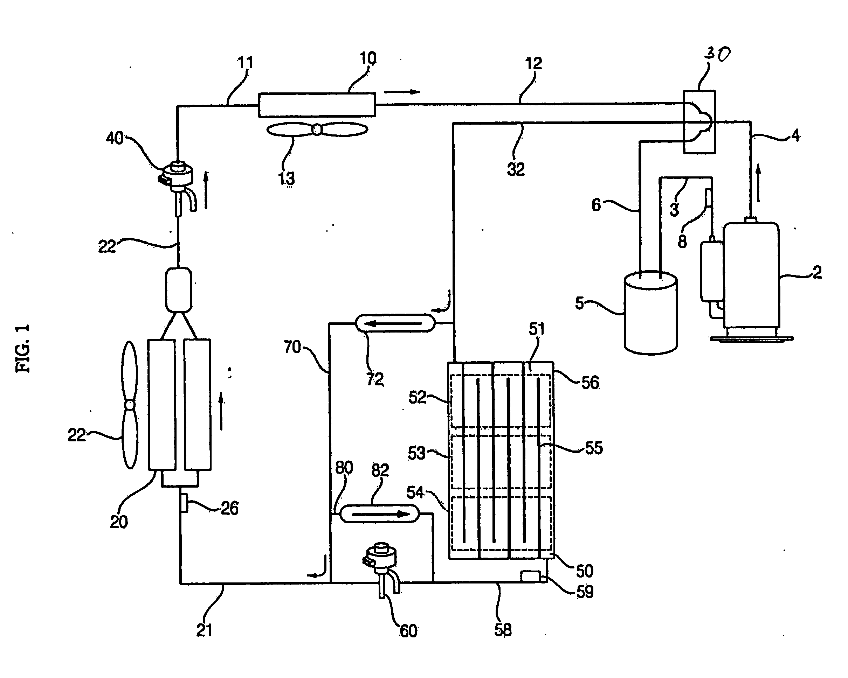

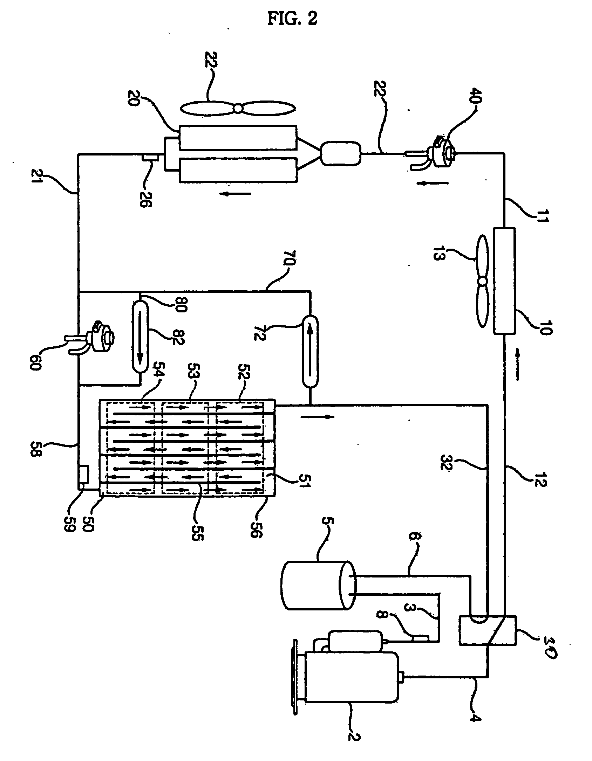

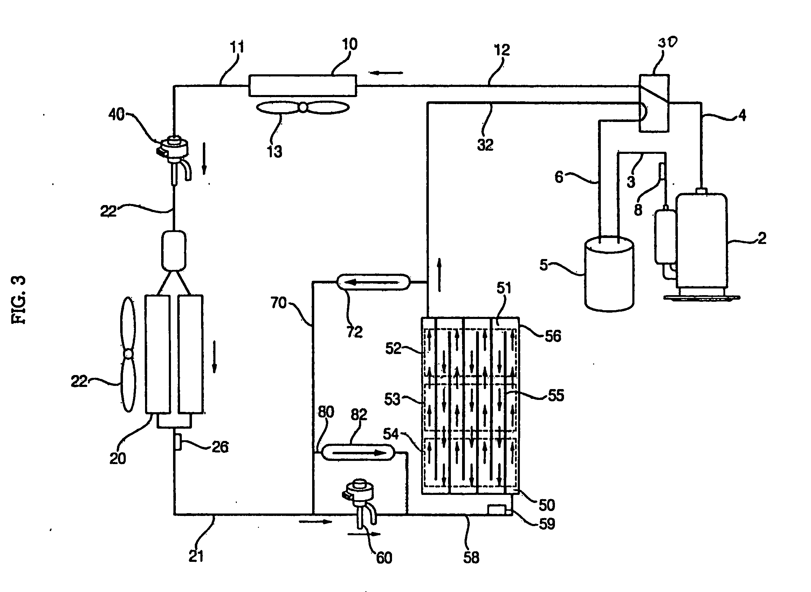

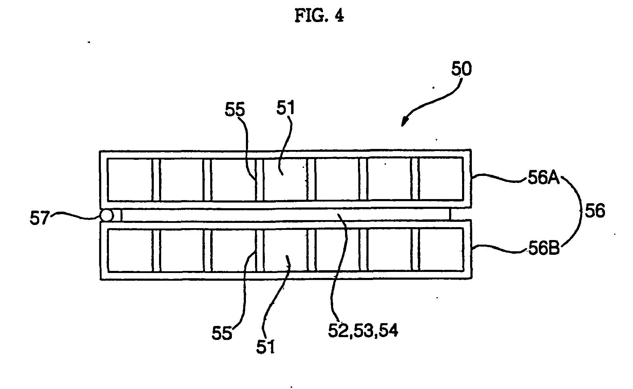

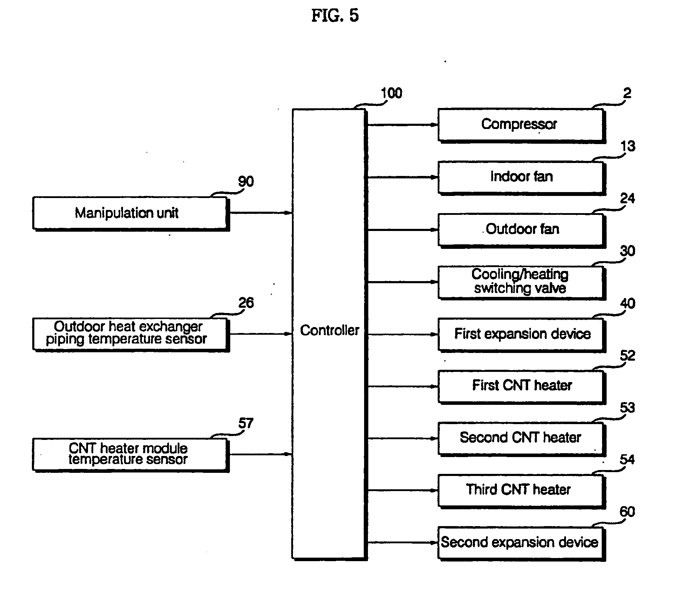

FIG. 1 is a schematic diagram illustrating a refrigerant flow when performing a cooling operation of an air conditioner according to an exemplary embodiment of the present invention, FIG. 2 is a schematic diagram illustrating a refrigerant flow when performing a heating operation of an air conditioner according to an exemplary embodiment of the present invention, FIG. 3 is a schematic diagram illustrating a refrigerant flow when performing a defrost operation of an air conditioner according to an exemplary embodiment of the present invention, FIG. 4 is an enlarged cross-sectional view of a CNT heater module shown in FIGS. 1 to 3, and FIG. 5 is a block diagram illustrating a control process of an air conditioner according to an exemplary embodiment of the present invention.

As shown in FIGS. 1 to 3, the air conditioner according to the present exemplary embodiment includes a compressor 2 for compressing a refrigerant; an indoor heat exchanger 10 for cooling/heating indoor with a refrigerant; an outdoor heat exchanger 20 for exchanging heat of a refrigerant and outdoor air; an outdoor fan 24 for ventilating outdoor air to the outdoor heat exchanger 20; a cooling/heating switching valve 30 for switching cooling/heating; a first expansion device 40 installed between the indoor heat exchanger 10 and the outdoor heat exchanger 20; a CNT heater module 50 installed between the outdoor heat exchanger 20 and the cooling/heating switching valve 30 to evaporate a refrigerant; and a second expansion device 60 installed between the outdoor heat exchanger 20 and the CNT heater module 50.

The compressor 2 may be a constant speed compressor or a capacity variable compressor.

A compressor inhalation pipe 3 for inhaling a refrigerant is connected to the compressor 2, and a compressor discharge pipe 4 for discharging the compressed refrigerant is connected to the compressor 2.

An accumulator 5 for accumulating a liquid refrigerant among a refrigerant and for flowing a vapor refrigerant to the compressor inhalation pipe 3 is connected to the compressor inhalation pipe 3.

An accumulator inhalation pipe 6 for inhaling a refrigerant into the accumulator 5 is connected to the accumulator 5.

The indoor heat exchanger 10 functions as an evaporator for evaporating a refrigerant expanded in the first expansion device 40 upon performing a cooling operation and functions as a condenser for condensing a refrigerant compressed in the compressor 2 and supplied from the cooling/heating switching valve 30 upon performing a heating operation.

The indoor heat exchanger 10 is connected to the first expansion device 40 and the first expansion device-indoor heat exchanger connection pipe 11 and is connected to the cooling/heating switching valve 30 and the indoor heat exchanger-cooling/heating switching valve connection pipe 12.

The indoor heat exchanger 10 can be formed in an air cooling type heat exchanger for ventilating indoor air to cool or to heat to the indoor heat exchanger 10, exchanging heat of indoor air and a refrigerant, discharging again indoor air to indoor, and directly cooling/heating indoor.

The indoor heat exchanger 10 is formed to exchange heat of a refrigerant flow path for passing through a refrigerant and a water flow path for passing through water, and a water pipe is connected to the indoor heat exchanger 10. The water pipe is connected to a floor pipe installed in a floor of indoor to cool/heat or to a radiator installed at indoor to cool/heat and thus the water pipe indirectly cools/heats indoor while cold water/warm water cooled/heated in the indoor heat exchanger 10 passes through the floor pipe or the radiator.

The indoor heat exchanger 10 is formed to exchange heat of a refrigerant flow path for passing through a refrigerant and a water flow path for passing through water, and a water pipe is connected to the indoor heat exchanger 10. The water pipe is connected to a heat exchange coil for passing through mixed air of indoor air and outdoor air and thus cold water/warm water cooled/heated in the indoor heat exchanger 10 cools/heats the mixed air and the mixed air is discharged to indoor to cool/heat indoor.

Hereinafter, the indoor heat exchanger 10 is formed as an air cooling type heat exchanger, and the air conditioner further includes an indoor fan 13 for circulating indoor air to indoor together with the indoor heat exchanger 10.

The outdoor heat exchanger 20 functions as a condenser for condensing a refrigerant compressed in the compressor 2, and supplied from the cooling/heating switching valve 30 upon performing a cooling operation, and functions as an evaporator for evaporating a refrigerant expanded in the first expansion device 40 upon performing a heating operation.

The outdoor heat exchanger 20 is connected to the second expansion device 60 and the second expansion device-outdoor heat exchanger connection pipe 21 and is connected to the first expansion device 40 and the outdoor heat exchanger-the first expansion device connection pipe 22.

When the first expansion device 40 is fully opened upon performing a heating operation, the outdoor heat exchanger 20 does not function as an evaporator for evaporating a refrigerant and functions as a condenser for condensing a refrigerant, and a process of fully opening the first expansion device 40 and operation thereof will be described in detail later.

The outdoor fan 24 is installed to ventilate outdoor air to the outdoor heat exchanger 20.

The cooling/heating switching valve 30 allows to flow a refrigerant evaporated in the indoor heat exchanger 10 to particularly, the accumulator 5 toward the compressor 2 while allowing to flow a refrigerant discharged from the compressor 2 to the outdoor heat exchanger 20 upon performing a cooling operation and allows to flow a refrigerant evaporated in the outdoor heat exchanger 20 or the CNT heater module 50 to particularly, the accumulator 5 toward the compressor 2 while allowing to flow a refrigerant discharged from the compressor 2 to the indoor heat exchanger 10 upon performing a heating operation.

The cooling/heating switching valve 30 is connected to the inhalation side, particularly, to the accumulator 5 of the compressor 2 by the accumulator inhalation pipe 6, is connected to the discharge side of the compressor 2 by the compressor discharge pipe 4, is connected to the indoor heat exchanger 10 by the indoor heat exchanger-cooling/heating switching valve connection pipe 12, and is connected to the CNT heater module 50 through the CNT heater module-cooling/heating switching valve connection pipe 32.

The first expansion device 40 expands a refrigerant condensed in the outdoor heat exchanger 20 upon performing a cooling operation, expands a refrigerant condensed in the indoor heat exchanger 10 upon performing a heating operation, and is formed with an electronic expansion valve that can adjust an expansion degree with an opening degree.

The first expansion device 40 is controlled to an opening degree for expanding a refrigerant upon performing a cooling operation and a heating operation, and if a defrost condition becomes upon performing a heating operation, a refrigerant is not evaporated in the outdoor heat exchanger 20 and is controlled to an opening degree of full open, i.e., an opening degree in which the first expansion device 40 does not expand a refrigerant so that a refrigerant evaporates in the CNT heater module 50.

If a defrost condition becomes while performing a heating operation, the CNT heater module 50 functions as an evaporator for evaporating a refrigerant, a refrigerant flow path 51 for evaporating a refrigerant while the refrigerant passes through is formed in the CNT heater module 50, and includes CNT heaters 52, 53, and 54 for applying heat to a refrigerant passing through the refrigerant flow path 51.

The refrigerant flow path 51 is formed within the CNT heater module 50 and includes a channel case 56 in which the barrier rib 55 is formed so that the refrigerant flow path 51 is formed in a zigzag shape within the CNT heater module 50.

The barrier rib 55 may be disposed long in a vertical direction within the channel case 56 and may be disposed long in a lateral direction.

When the barrier rib 55 is disposed long in a vertical direction, a plurality of barrier ribs 55 are separated in a lateral direction, and when the barrier rib 55 is disposed long in a lateral direction, a plurality of barrier ribs 55 are separated in a vertical direction.

One end of the barrier rib 55 is connected to one end of the channel case 56, and the other end thereof is separated from the other end of the channel case 56.

When one of a plurality of barrier ribs 55 is connected at the lower end of the channel case 56 and is separated from an upper end of the channel case 56, and another barrier rib positioned at the side of the one barrier rib 55 is connected to the upper end of the channel case 56 and is separated from the lower end of the channel case 56.

When another barrier rib of the plurality of barrier ribs 55 is connected to the left side end of the channel case 56 and is separated from the right side end of the channel case 56, the other barrier rib positioned at the side of the another barrier rib 55 is connected to the right side end of the channel case 56, and is separated from the left side end of the channel case 56.

The CNT heater module 50 is provided in a plurality of channel cases 56A and 56B, and CNT heaters 52, 53, and 54 are formed between the plurality of channel cases 56A and 56B.

The CNT heater module 50 contacts with one 56A of the channel case 56A and 56B contacting with one surface of the CNT heaters 52, 53, and 54, and the other surface of the CNT heaters 52, 53, and 54 contacts with the other one 56B of the channel case 56A and 56B.

A singular CNT heater module 50 can heat the channel cases 56A and 56B and a plurality of CNT heater modules 50 can heat the channel cases 56A and 56B. The CNT heaters 52, 53, and 54 are carbon nano tube (CNT) heaters, a plurality of CNT heaters 52, 53, and 54 are installed to separate, and when the CNT heaters 52, 53, and 54 are selectively controlled, power consumption and a temperature of a refrigerant can be adjusted, and it is preferable that the plurality of CNT heaters 52, 53, and 54 are installed to separate and selectively controlled.

For convenience of description, a case where the first, second, and third CNT heaters 52, 53, and 54 are installed is described.

The CNT heater module 50 includes a CNT heater module temperature sensor 57 for detecting a temperature of the CNT heater module 50.

The CNT heater module temperature sensor 57 is installed to contact with the channel case 56.

The CNT heater module 50 is connected to the CNT heater module 50 through the CNT heater module-cooling/heating switching valve connection pipe 32, and is connected to the second expansion device 60 through the second expansion device-CNT heater module connection pipe 58.

The second expansion device 60 does not expand a refrigerant upon performing a cooling operation and a heating operation and expands a refrigerant, if a defrost condition becomes while performing a heating operation and is formed with an electronic expansion valve that can adjust an expansion degree with an opening degree.

The air conditioner according to the present exemplary embodiment further includes a CNT heater module/second expansion device bypass flow path 70 for connecting between the cooling/heating switching valve 50 and the CNT heater module 50 and between the outdoor heat exchanger 20 and the second expansion device 60.

One end of the CNT heater module/second expansion device bypass flow path 70 is connected to the CNT heater module-cooling/heating switching valve connection pipe 32, and the other end thereof is connected to the second expansion device-outdoor heat exchanger connection pipe 21.

In the CNT heater module/second expansion device bypass flow path 70, a check valve 72 (hereinafter, referred to as a "first check valve") for blocking a refrigerant not to flow between the cooling/heating switching valve 30 and the CNT heater module 50 from between the outdoor heat exchanger 20 and the second expansion device 60 is installed.

The air conditioner according to the present exemplary embodiment includes a second expansion device bypass flow path 80 for connecting between the second expansion device 60 and the CNT heater module 50 and the CNT heater module/the second expansion device bypass flow path 70.

One end of the second expansion device bypass flow path 80 is connected to the second expansion device-CNT heater module connection pipe 58, and the other end thereof is connected to the CNT heater module/the second expansion device bypass flow path 70.

The second expansion device bypass flow path 80 is connected between the first check valve 72 and the second expansion device-outdoor heat exchanger connection pipe 21 among the CNT heater module/the second expansion device bypass flow path 70.

In the second expansion device bypass flow path 80, a check valve 82 (hereinafter, refereed to as a "second check valve") for blocking a refrigerant not to flow to the second expansion device bypass flow path 70 from between the second expansion device 60 and the CNT heater module 50 is installed.

The air conditioner according to the present exemplary embodiment includes a manipulation unit 90 in which a user manipulates and a controller 100 for controlling the compressor 2, the indoor fan 13, the outdoor fan 24, the cooling/heating switching valve 30, the first expansion device 40, the CNT heater module 50, and the second expansion device 60 according to a manipulation of the manipulation unit 90 and a temperature condition.

The controller 80 sustains, if a defrost condition becomes while performing a heating operation, a heating mode of the cooling/heating switching valve 30, and fully opens the first expansion device 40, adjusts an opening degree so that the second expansion device 60 expands a refrigerant, and performs a continuous heating defrost operation for operating the CNT heater module 50.

Here, a continuous heating defrost operation defrosts the outdoor heat exchanger 20 by heat of a refrigerant while the indoor heat exchanger 10 continuously heats indoor instead of switching the cooling/heating switching valve 30 to a cooling mode in a defrost condition, and during a continuous heating defrost operation, in the air conditioner, the outdoor heat exchanger 20 functions as a condenser, the second expansion device 60 functions as an expansion device; and the CNT heater module 50 functions as an evaporator.

The defrost condition is a condition in which a heating operation time period has elapsed a setting time period and a piping temperature of the outdoor heat exchanger 20 is a setting temperature or less while performing a heating operation, and in a connection pipe connected to the outdoor heat exchanger 20 or the outdoor heat exchanger 20, an outdoor heat exchanger piping temperature sensor 26 for detecting a temperature is installed, and in a defrost condition of the air conditioner, i.e., if a temperature detected in the outdoor heat exchanger piping temperature sensor 26 is a setting temperature or less, the controller 80 controls a opening degree of the second expansion device 60 to a setting opening degree so that the second expansion device 60 expands a refrigerant.

When controlling the second expansion device 60, the controller 100 initializes the second expansion device to a defrost initial opening degree and adjusts an opening degree of the second expansion device 60.

When performing a continuous heating defrost operation, the controller 100 adjusts an opening degree of the second expansion device 60 according to an inhalation superheat temperature, and the controller 100 can adjust an opening degree of the second expansion device 60 so that a difference between an inhalation temperature of the compressor 2 and an inlet temperature of the CNT heater module 50 reaches a target inhalation superheat temperature (for example, 3°C).

At the compressor 2 side, a compressor inhalation temperature sensor 8 for detecting an inhalation temperature of the compressor 2 is installed, at the CNT heater module 50 side, a CNT heater module inlet temperature sensor 59 for detecting an inlet temperature of the CNT heater module 50 is installed, the compressor inhalation temperature sensor 8 is installed in the compressor inhalation pipe 3, and the CNT heater module inlet temperature sensor 59 is installed in the second expansion device-CNT heater module connection pipe 58.

The controller 90 can adjust an opening degree of the second expansion device 60 at the second expansion device opening change setting time interval (for example, 10 seconds). That is, after an opening degree of the second expansion device 60 is initialized, if the second expansion device opening change setting time period has elapsed, the controller 90 adjusts an opening degree of the second expansion device 60 so that a difference between a newly detected inhalation temperature of the compressor 2 and an inlet temperature of the CNT heater module 50 reaches a target inhalation superheat temperature (for example, 3°C), and adjusts an opening degree of the second expansion device 60 at the second expansion device opening change setting time interval.

The controller 90 determines the tuned-on number of a plurality of CNT heaters 52, 53, and 54 according to a temperature of the CNT heater module 50. The controller 90 can sequentially turn on/off a plurality of CNT heaters 52, 53, and 54 according to a temperature detected in the CNT heater module temperature sensor 57. If a temperature detected in the CNT heater module temperature sensor 57 is less than the first setting temperature (100°C), the controller 90 sequentially increases the turned-on number of the plurality of CNT heaters 52, 53, and 54, and if a temperature detected in the CNT heater module temperature sensor 57 is a first setting temperature (for example, 100°C) or more and is less than a second setting temperature (for example, 120°C) higher than the first setting temperature, the controller 90 sustains the present turned-on number of the CNT heaters 52, 53, and 54, if a temperature detected in the CNT heater module temperature sensor 57 is a second setting temperature or more and is less than a third setting temperature (for example, 150°C) higher than the second setting temperature, the controller 90 sequentially reduces the turned-on number of the plurality of CNT heaters 52, 53, and 54, if a temperature detected in the CNT heater module temperature sensor 57 is a third setting temperature (for example, 150°C) or more, the controller 90 turns off all of the plurality of CNT heaters 52, 53, and 54 for safety.

The controller 100 determines the turned-on number of the plurality of CNT heaters 52, 53, and 54 at a CNT heater module change setting time interval (for example, 1 second).

Hereinafter, operation of the present invention having the above configuration is described as follows.

First, when a cooling operation is manipulated through the manipulation unit 90, the controller 100 controls the cooling/heating switching valve 30 to a cooling mode, drives the compressor 2, drives the indoor fan 13 and the outdoor fan 24, and adjusts an opening degree of the first expansion device 40.

When performing such a cooling operation, the controller 100 may close the second expansion device 40 and control the second expansion device 40 to an opening mode.

When driving the compressor 2, as shown in FIG. 1, a refrigerant compressed in the compressor 2 flows to the CNT heater module-cooling/heating switching valve connection pipe 32 by passing through the cooling/heating switching valve 30, flows to the second expansion device-the outdoor heat exchanger connection pipe 21 by passing through the CNT heater module/the second expansion device bypass flow path 70, and is injected into the outdoor heat exchanger 20.

The refrigerant injected into the outdoor heat exchanger 20 is condensed while exchanging heat with outdoor air, is expanded in the first expansion device 40, and is injected into the indoor heat exchanger 10.

The refrigerant injected into the indoor heat exchanger 10 is evaporated while exchanging heat with indoor air or water, flows to the accumulator 5 by passing through the cooling/heating switching valve 30, and is recovered again to the compressor 2 and compressed.

That is, when the air conditioner performs a cooling operation, a refrigerant is compressed in the compressor 2 and bypasses the CNT heater module 50 and the second expansion device 60, is condensed in the outdoor heat exchanger 20, is expanded in the first expansion device 4, and is evaporated in the indoor heat exchanger 10.

When a heating operation is manufactured through the manipulation unit 90, the controller 100 controls the cooling/heating switching valve 30 to a heating mode, drives the compressor 2, drives the indoor fan 13 and the outdoor fan 24, and adjusts an opening degree of the first expansion device 40. When performing such a cooling operation, the controller 100 may close the second expansion device 40 and control the second expansion device 40 to an opening mode.

When driving the compressor 2, as shown in FIG. 2, a refrigerant compressed in the compressor 2 flows to the indoor heat exchanger 10 after passing through the cooling/heating switching valve 30, is condensed by exchanging heat with indoor air or water while passing through the indoor heat exchanger 10, and is expanded in the first expansion device 40.

The refrigerant expanded in the first expansion device 40 flows to the outdoor heat exchanger 20 and is evaporated by exchanging heat with outdoor air while passing through the outdoor heat exchanger 20.

The refrigerant evaporated in the outdoor heat exchanger 20 flows to the second expansion device-the outdoor heat exchanger connection pipe 21, and flows to the second expansion device-CNT heater module connection pipe 58 by passing though the second expansion device bypass flow path 80 if the second expansion device 40 is closed, and flows to the second expansion device-CNT heater module connection pipe 58 by passing through the second expansion device 40 if the second expansion device is opened.

The refrigerant flowed to the second expansion device-CNT heater module connection pipe 58 passes through a flow path 51 of the CNT heater module 50 without exchanging heat, flows to the CNT heater module-cooling/heating switching valve connection pipe 32, flows to the accumulator 5 by passing through the cooling/heating switching valve 30, and is recovered again to the compressor 2 and is compressed.

That is, when the air conditioner performs a cooling operation, a refrigerant is compressed in the compressor 2, is condensed in the indoor heat exchanger 10, is expanded in the first expansion device 40, is evaporated in the outdoor heat exchanger 20, passes through or bypasses the second expansion device 60, and is recovered to the compressor 2 after passing through the CNT heater module 50 without exchanging heat.

Upon performing such a heating operation, when the outdoor heat exchanger 20 exchanges heat with outdoor air, frost is generated, and the air conditioner performs a continuous heating defrost operation if a defrost condition becomes during a heating operation.

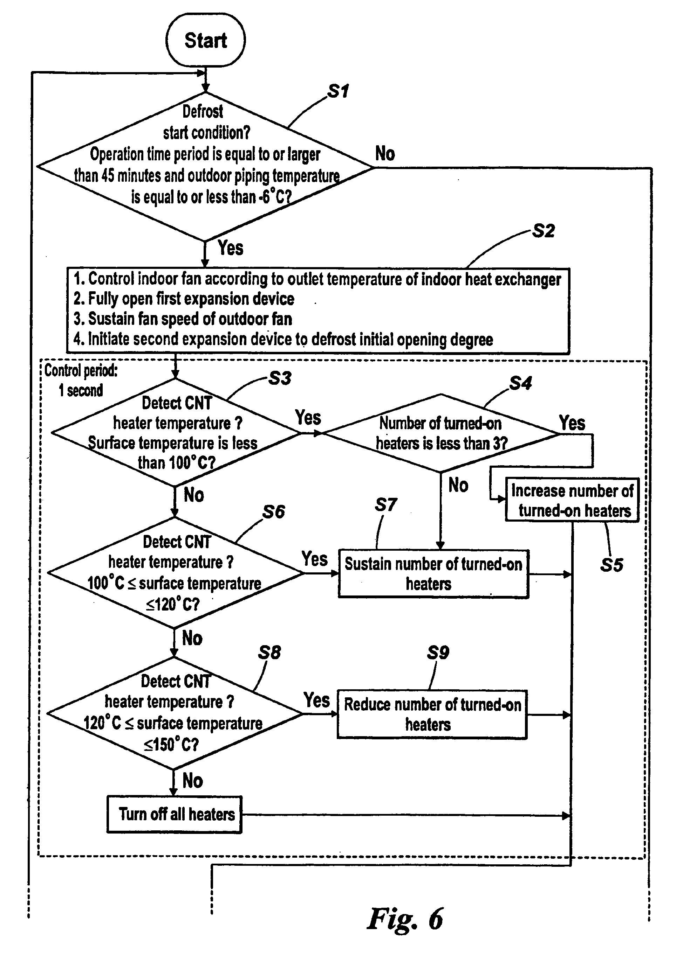

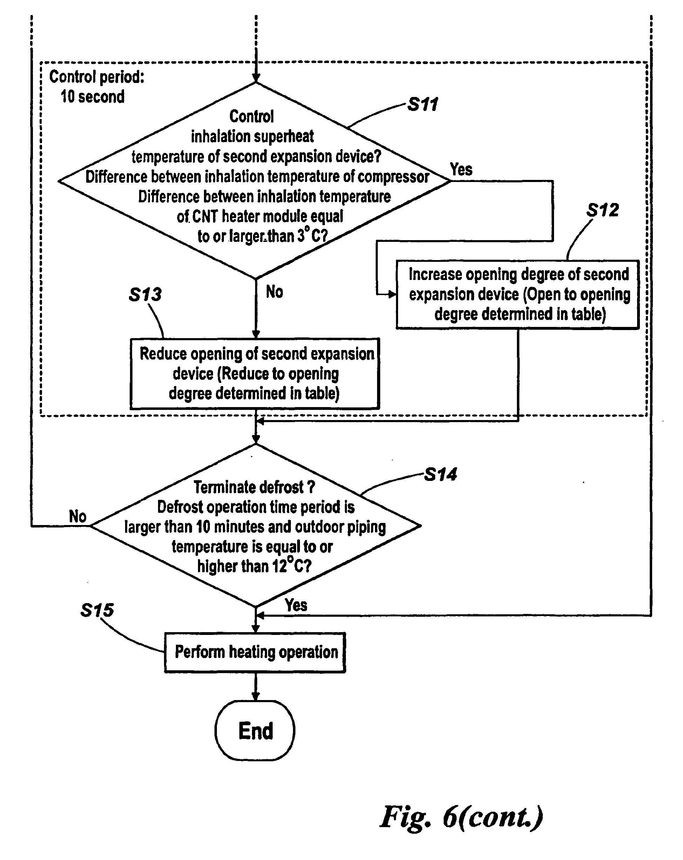

Hereinafter, a continuous heating defrost operation will be described in detail with reference to FIG. 6.

FIG. 6 is a flowchart illustrating a method of operating an air conditioner according to an exemplary embodiment of the present invention.

If a heating time period is equal to or larger than a setting time period (for example, 45 minutes) while performing a heating operation and if a piping temperature of the outdoor heat exchanger 20 is equal to or less than a setting temperature (-6°C), the controller 100 performs a continuous heating defrost operation (S1)(S2).

That is, the controller 100 controls the indoor fan 13 according to an outlet temperature of the indoor heat exchanger 10. The controller 100 fully opens the first expansion device 40. The controller 100 sustains a fan speed of the outdoor fan 24. The controller 100 initializes the second expansion device 60 to a defrost initial opening degree and controls the CNT heater module 50 (S2).

When performing such a control process, as shown in FIG. 3, a refrigerant compressed in the compressor 2 flows to the indoor heat exchanger 10 by passing through the cooling/heating switching valve 30 and is condensed by exchanging heat with indoor air or water while passing through the indoor heat exchanger 10, and passes through the first expansion device 40 without expanding.

The refrigerant passed through the first expansion device 40 without expanding flows to the outdoor heat exchanger 20, passes through the outdoor heat exchanger 20, and is condensed while defrosting frost generated on a surface of the outdoor heat exchanger 20.

The refrigerant defrosted frost while passing through the outdoor heat exchanger 20 flows to the second expansion device-the the outdoor heat exchanger connection pipe 21, and is expanded while passing though the second expansion device 40 distend.

The refrigerant expanded in the second expansion device 40 flows to the second expansion device-CNT heater module connection pipe 58, injected into the refrigerant flow path 51 of the CNT heater module 50, and is evaporated while absorbing heat from the turned on CNT heaters 52, 53, and 54 of the CNT heaters 52, 53, and 54.

The evaporated refrigerant flows to the CNT heater module-cooling/heating switching valve connection pipe 32, flows to the accumulator 5 by passing through the cooling/heating switching valve 30, and is recovered again to the compressor 2 and compressed.

That is, when the air conditioner performs a continuous heating defrost operation, a refrigerant is compressed in the compressor 2, is condensed in the indoor heat exchanger 10, passes through the first expansion device 40 without expanding, is condensed in the outdoor heat exchanger 20, and is expanded while passing through the second expansion device 60, and is recovered to the compressor 2 after being evaporated in the CNT heater module 50.

Upon performing such a heating operation, when the outdoor heat exchanger 20 exchanges heat with outdoor air, frost is generated and if a defrost condition becomes while performing a heating operation, the air conditioner performs a continuous heating defrost operation.

The controller 100 controls the CNT heater module 50 at a CNT heater module change setting time interval (for example, 1 second)(S3 to S10).

If a temperature of the CNT heater module 50 is less than a first setting temperature (100°C), the controller 100 sequentially increases the turned-on number of the plurality of CNT heaters 52, 53, and 54 (S3 to S5).

When a temperature of the CNT heater module 50 is less than the first setting temperature (100°C), if the turned-on number of the plurality of CNT heaters 52, 53, and 54 is smaller than the number of a plurality of CNT heaters (for example, 3), the controller 100 increases the turned-on number of the plurality of CNT heaters 52, 53, and 54 (S3)(S4)(S5).

When a temperature of the CNT heater module 50 is less than the first setting temperature (100°C), if the turned-on number of the plurality of CNT heaters 52, 53, and 54 is not smaller than the number of a plurality of CNT heaters, the controller 100 sustains the turned-on number of the plurality of CNT heaters 52, 53, and 54 (S3)(S4)(S7).

If a temperature of the CNT heater module 50 is equal to or higher than the first setting temperature (for example, 100°C) and is less than a second setting temperature (for example, 120°C) higher than the first setting temperature, the controller 100 sustains the present turned-on number of the CNT heaters 52, 53, and 54 (S6)(S7).

If a temperature of the CNT heater module 50 is equal to or higher than the second setting temperature and is less than a third setting temperature (for example, 150°C) higher than the second setting temperature, the controller 100 sequentially reduces the turned-on number of the plurality of CNT heaters 52, 53, and 54 (S8)(S9).

If a temperature of the CNT heater module 50 is equal to or higher than a third setting temperature (for example, 150°C), the controller 100 turns off all of the plurality of CNT heaters 52, 53, and 54 for safety (S8)(S10).

The controller 100 controls the CNT heater module 50 at a CNT heater module change setting time interval (for example, 1 second) and adjusts an opening degree of the second expansion device 60 at a second expansion device opening degree change setting time interval (for example, 10 seconds) (S11 to S13).

The controller 100 controls an opening degree of the second expansion device 60 according to a target inhalation superheat temperature.

If a difference between an inhalation temperature of the compressor 2 and an inlet temperature of the CNT heater module 50 is a target inhalation superheat temperature (for example, 3°C) or more, the controller 100 increases an opening degree of the second expansion device 60 to a predetermined opening degree value in a previous stored table (S11)(S12).

If a difference between an inhalation temperature of the compressor 2 and an inlet temperature of the CNT heater module 50 is less than a target inhalation superheat temperature (for example, 3°C), the controller 100 reduces an opening degree of the second expansion device 60 to a predetermined opening value in a previously stored table (S11)(S13).

As described above, the controller 100 adjusts the second expansion device 60, and if the second expansion device opening change setting time period has elapsed, the controller 100 adjusts again an opening degree of the second expansion device 60.

If a continuous heating defrost operation time period is larger than a defrost termination setting time period (for example, 10 minutes) and if a piping temperature of the outdoor heat exchanger 20 is equal to or higher than a defrost termination setting temperature (for example, 12°C), the controller 100 terminates defrost, and performs a general heating operation (S14)(S15).

The controller 100 sustains a heating mode of the cooling/heating switching valve 30, and continues to drive the compressor 2, the indoor fan 13, and the outdoor fan 24, and adjusts an opening degree of the first expansion device 40. The controller 100 closes the first expansion device 40 or controls the second expansion device 40 to an opening mode.

In an air conditioner according to the present invention having the above-described configuration, when performing a heating operation, if a defrost condition becomes while a refrigerant of a high temperature flows to the outdoor heat exchanger, the outdoor heat exchanger is defrosted, a refrigerant passing through the outdoor heat exchanger is expanded in a second expansion device and is evaporated in a CNT heater module and thus continuous heating can be performed with the indoor heat exchanger.

Further, upon performing low temperature heating in which an outdoor temperature is low, indoor can be continuously heated, and thus heating ability can be enhanced.

The embodiment of the invention being thus described, it will be obvious that the same may be varied in many ways. Such variations are not to be regarded as a departure from the scope of the invention. The invention is solely limited by the following claims.

## Claims

1. An air conditioner comprising:
a compressor (2) for compressing a refrigerant;
an indoor heat exchanger (10) for cooling or heating indoor with a refrigerant;
an outdoor heat exchanger (20) for exchanging heat of a refrigerant and outdoor air;
an outdoor fan (22) for ventilating outdoor air to the outdoor heat exchanger (20);
a cooling/heating switching valve (30) for switching cooling/heating;
a first expansion device (40) installed between the indoor heat exchanger (10) and the outdoor heat exchanger (20);
a heater module (50) installed between the outdoor heat exchanger (20) and the cooling/heating switching valve (30) to evaporate a refrigerant;
a second expansion device (60) installed between the outdoor heat exchanger (20) and the carbon nanotube heater module (50); and
a controller (100) for sustaining, when performing a heating operation, if a defrost condition becomes, a heating mode of the cooling/heating switching valve (30), fully opening the first expansion device (40), adjusting an opening degree so that the second expansion device (60) expands a refrigerant, and performing a continuous heating defrost operation for operating the heater module (50),
**characterised in that**: the heater module (50) is a carbon nanotube heater
module (CNT),
the air conditioner further comprises a heater module temperature sensor (57) for detecting a temperature of the carbon nanotube heater module (50),
the carbon nanotube heater module (50) includes a plurality of carbon nanotube heaters (52)(53)(54), and
the controller (100) determines the turned-on number of the plurality of carbon nanotube heaters (52)(53)(54) according to a temperature of the carbon nanotube heater module (50).

2. The air conditioner of claim 1, further comprising a carbon nanotube heater module/second expansion device bypass flow path (70) for connecting between the cooling/heating switching valve (30) and the carbon nanotube heater module (50) and between the outdoor heat exchanger (20) and the second expansion device (60).

3. The air conditioner of claim 1, further comprising a check valve (72) installed in the carbon nanotube heater module/second expansion device bypass flow path (70) to block a refrigerant not to flow from between the outdoor heat exchanger (20) and the second expansion device (60) to between the cooling/heating switching valve (30) and the carbon nanotube heater module (50).

4. The air conditioner of claim 2, further comprising a second expansion device bypass flow path (80) for connecting between the second expansion device (60) and the carbon nanotube heater module (50) and the carbon nanotube heater module/the second expansion device bypass flow path (70).

5. The air conditioner of claim 4, further comprising a check valve (82) installed in the second expansion device bypass flow path (80) to block a refrigerant not to flow from between the second expansion device (60) and the carbon nanotube heater module (50) to the second expansion device bypass flow path (80).

6. The air conditioner of claim 1, wherein the defrost condition is a condition for allowing a piping temperature of the outdoor heat exchanger (20) to a setting temperature or less while performing a heating operation.

7. The air conditioner of claim 1, wherein the controller initializes the second expansion device (60) to a defrost initial opening degree and adjusts an opening degree of the second expansion device (60) under a defrost condition of the air conditioner.

8. The air conditioner of claim 1, further comprising:
a compressor inhalation temperature sensor (8) for detecting an inhalation temperature of the compressor (2); and
a carbon nanotube heater module inlet temperature sensor (59) for detecting an inlet temperature of the carbon nanotube heater module (50),
wherein the controller (100) adjusts an opening degree of the second expansion device (60) so that a difference between an inhalation temperature of the compressor (2) and an inlet temperature of the carbon nanotube heater module (50) reaches a target inhalation superheat temperature.

9. The air conditioner of claim 8, wherein the controller (100) adjusts an opening degree of the second expansion device (60) at a second expansion device opening change setting time interval.

10. The air conditioner of claim 1, wherein the controller (100) determines the turned-on number of the plurality of carbon nanotube heaters (52)(53)(54) at a carbon nanotube heater module change setting time interval.

## Patentansprüche

1. Klimaanlage, die Folgendes aufweist:
einen Kompressor (2) zum Komprimieren eines Kühlmittels;
einen Innenraum-Wärmetauscher (10) zum Kühlen oder Heizen in einem Innenraum mit einem Kühlmittel;
einen Außenraum-Wärmetauscher (20) zum Austauschen von Wärme zwischen einem Kühlmittel und einer Außenluft;
ein Außenraumgebläse (22) zum Blasen von Außenluft zum Außenraum-Wärmetauscher (20);
ein Kühl-/Heiz-Umschaltventil (30) zum Umschalten zwischen Kühlen und Heizen;
ein erstes Ausdehnungsgefäß (40), das zwischen dem Innenraum-Wärmetauscher (10) und dem Außenraum-Wärmetauscher (20) installiert ist;
ein Heizmodul (50) zum Verdampfen eines Kühlmittels, das zwischen dem Außenraum-Wärmetauscher (20) und dem Kühl-/Heiz-Umschaltventil (30) installiert ist;
ein zweites Ausdehnungsgefäß (60), das zwischen dem Außenraum-Wärmetauscher (20) und dem Kohlenstoffnanoröhrenheizmodul (50) installiert ist; und
eine Steuerung (100), um beim Eintreten einer Enteisungsbedingung während eines Ausführens eines Heizvorgangs einen Heizmodus des Kühl-/Heiz-Umschaltventils (30) fortzusetzen, das erste Ausdehnungsgefäß (40) vollständig zu öffnen, einen Öffnungsgrad so einzustellen, dass das zweite Ausdehnungsgefäß (60) ein Kühlmittel expandiert, und einen kontinuierlichen Enteisungsheizvorgang durchzuführen, um das Heizmodul (50) zu betreiben,
**dadurch gekennzeichnet, dass**
das Heizmodul (50) ein Kohlenstoffnanoröhrenheizmodul (CNT) ist,
die Klimaanlage ferner einen Heizmodultemperatursensor (57) zum Erfassen einer Temperatur des Kohlenstoffnanoröhrenheizmoduls (50) aufweist,
das Kohlenstoffnanoröhrenheizmodul (50) mehrere Kohlenstoffnanoröhrenheizungen (52) (53) (54) umfasst, und
die Steuerung (100) gemäß einer Temperatur des Kohlenstoffnanoröhrenheizmoduls (50) bestimmt, wie viele der mehreren Kohlenstoffnanoröhrenheizungen (52) (53) (54) angeschaltet sind.

2. Klimaanlage nach Anspruch 1, die ferner einen das Kohlenstoffnanoröhrenheizmodul und das zweite Ausdehnungsgefäß umgehenden Strömungsweg (70) aufweist, der den Bereich zwischen dem Kühl-/Heiz-Umschaltventil (30) und dem Kohlenstoffnanoröhrenheizmodul (50) mit dem Bereich zwischen dem Außenraum-Wärmetauscher (20) und dem zweiten Ausdehnungsgefäß (60) verbindet.

3. Klimaanlage nach Anspruch 1, die ferner ein Rückschlagventil (72) aufweist, das in dem das Kohlenstoffnanoröhrenheizmodul und das zweite Ausdehnungsgefäß umgehenden Strömungsweg (70) installiert ist, um ein Kühlmittel so abzublocken, dass es nicht aus dem Bereich zwischen dem Außenraum-Wärmetauscher (20) und dem zweitem Ausdehnungsgefäß (60) in den Bereich zwischen dem Kühl-/Heiz-Umschaltventil (30) und dem Kohlenstoffnanoröhrenheizmodul (50) fließen kann.

4. Klimaanlage nach Anspruch 2, die ferner einen das zweite Ausdehnungsgefäß umgehenden Strömungsweg (80) aufweist, der den Bereich zwischen dem zweiten Ausdehnungsgefäß (60) und dem Kohlenstoffnanoröhrenheizmodul (50) mit dem das Kohlenstoffnanoröhrenheizmodul und das zweite Ausdehnungsgefäß umgehenden Strömungsweg (70) verbindet.

5. Klimaanlage nach Anspruch 4, die ferner ein Rückschlagventil (82) aufweist, das in dem das zweite Ausdehnungsgefäß umgehenden Strömungsweg (80) installiert ist, um ein Kühlmittel so abzublocken, dass es nicht aus dem Bereich zwischen dem zweiten Ausdehnungsgefäß (60) und dem Kohlenstoffnanoröhrenheizmodul (50) in den das zweite Ausdehnungsgefäß umgehenden Strömungsweg (80) fließen kann.

6. Klimaanlage nach Anspruch 1, worin die Enteisungsbedingung eine Bedingung darstellt, die bei Durchführung eines Heizvorgangs eine Leitungstemperatur des Außenraum-Wärmetauschers (20) zulässt, die gleich einer Solltemperatur oder geringer ist.

7. Klimaanlage nach Anspruch 1, worin die Steuerung das zweite Ausdehnungsgefäß (60) auf einen anfänglichen Enteisungsöffnungsgrad voreinstellt und einen Öffnungsgrad des zweiten Ausdehnungsgefäßes (60) unter einer Enteisungsbedingung der Klimaanlage einstellt.

8. Klimaanlage nach Anspruch 1, die ferner Folgendes aufweist:
einen Kompressor-Ansaugtemperatursensor (8) zum Erfassen einer Ansaugtemperatur des Kompressors (2); und
einen Kohlenstoffnanoröhrenheizmodul-Einlasstemperatursensor (59) zum Erfassen einer Einlasstemperatur des Kohlenstoffnanoröhrenheizmoduls (50),
wobei die Steuerung (100) einen Öffnungsgrad des zweiten Ausdehnungsgefäßes (60) so einstellt, dass der Unterschied zwischen einer Ansaugtemperatur des Kompressors (2) und einer Einlasstemperatur des Kohlenstoffnanoröhrenheizmoduls (50) eine Ansaugüberhitzungssolltemperatur erreicht.

9. Klimaanlage nach Anspruch 8, worin die Steuerung (100) einen Öffnungsgrad des zweiten Ausdehnungsgefäßes (60) bei einem Zeitintervall zum Setzen einer Öffnungsänderung des zweiten Ausdehnungsgeiaßes einstellt.

10. Klimaanlage nach Anspruch 1, worin die Steuerung (100) bei einem Zeitintervall zum Setzen einer Änderung des Kohlenstoffnanoröhrenheizmoduls bestimmt, wie viele der mehreren Kohlenstoffnanoröhrenheizungen (52) (53) (54) angeschaltet sind.

## Revendications

1. Climatiseur comprenant :
un compresseur (2) destiné à comprimer un réfrigérant ;
un échangeur de chaleur intérieur (10) destiné à refroidir ou chauffer l'intérieur par un réfrigérant ;
un échangeur de chaleur extérieur (20) destiné à échanger la chaleur d'un réfrigérant avec l'air extérieur ;
un ventilateur extérieur (22) destiné à ventiler l'air extérieur à l'échangeur de chaleur extérieur (20) ;
une soupape de commutation de refroidissement/chauffage (30) destinée à commuter le refroidissement/chauffage ;
un premier dispositif de détente (40) installé entre l'échangeur de chaleur intérieur (10) et l'échangeur de chaleur extérieur (20) ;
un module de chauffage (50) installé entre l'échangeur de chaleur extérieur (20) et la soupape de commutation de refroidissement/chauffage (30) pour évaporer un réfrigérant ;
un deuxième dispositif de détente (60) installé entre l'échangeur de chaleur extérieur (20) et le module de chauffage à nanotubes de carbone (50) ; et
un dispositif de commande (100) destiné à maintenir, lors de l'exécution d'une opération de chauffage, si un état de dégivrage s'établit, un mode de chauffage de la soupape de commutation de refroidissement/chauffage (30), à ouvrir complètement le premier dispositif de détente (40), à ajuster un degré d'ouverture de sorte que le deuxième dispositif de détente (60) dilate un réfrigérant, et à effectuer une opération de dégivrage par chauffage continu pour faire fonctionner le module de chauffage (50),
**caractérisé en ce que** : le module de chauffage (50) est un module de chauffage à nanotubes de carbone (CNT),
le climatiseur comprend en outre un capteur de température (57) de module de chauffage pour détecter une température du module de chauffage à nanotubes de carbone (50),
le module de chauffage à nanotubes de carbone (50) comporte une pluralité de dispositifs de chauffage à nanotubes de carbone (52)(53)(54), et
le dispositif de commande (100) détermine le nombre de mises en marche de la pluralité de dispositifs de chauffage à nanotubes de carbone (52)(53)(54) selon la température du module de chauffage à nanotubes de carbone (50).

2. Climatiseur de la revendication 1, comprenant en outre une voie d'écoulement de contournement (70) de module de chauffage à nanotubes de carbone/deuxième dispositif de détente pour assurer une liaison entre la soupape de commutation de refroidissement/chauffage (30) et le module de chauffage à nanotubes de carbone (50) et entre l'échangeur de chaleur extérieur (20) et le deuxième dispositif de détente (60).

3. Climatiseur de la revendication 1, comprenant en outre un clapet anti-retour (72) installé dans la voie d'écoulement de contournement (70) de module de chauffage à nanotubes de carbone/deuxième dispositif de détente pour empêcher un réfrigérant de circuler de l'espace entre l'échangeur de chaleur extérieur (20) et le deuxième dispositif de détente (60) vers l'espace entre la soupape de commutation de refroidissement/chauffage (30) et le module de chauffage à nanotubes de carbone (50).

4. Climatiseur de la revendication 2, comprenant en outre une voie d'écoulement de contournement (80) de deuxième dispositif de détente pour assurer une liaison entre le deuxième dispositif de détente (60) et le module de chauffage à nanotubes de carbone (50) et la voie d'écoulement de contournement (70) de module de chauffage à nanotubes de carbone/deuxième dispositif de détente.

5. Climatiseur de la revendication 4, comprenant en outre un clapet anti-retour (82) installé dans la voie d'écoulement de contournement (80) de deuxième dispositif de détente pour empêcher un réfrigérant de circuler de l'espace entre le deuxième dispositif de détente (60) et le module de chauffage à nanotubes de carbone (50) vers la voie d'écoulement de contournement (80) de deuxième dispositif de détente.

6. Climatiseur de la revendication 1, dans lequel l'état de dégivrage est un état permettant à une température de tuyauterie de l'échangeur de chaleur extérieur (20) d'atteindre une température inférieure ou égale à une température de réglage lors de l'exécution d'une opération de chauffage.

7. Climatiseur de la revendication 1, dans lequel le dispositif de commande initialise le deuxième dispositif de détente (60) à un degré d'ouverture initial de dégivrage et ajuste un degré d'ouverture du deuxième dispositif de détente (60) sous un état de dégivrage du climatiseur.

8. Climatiseur selon la revendication 1, comprenant en outre :
un capteur (8) de température d'aspiration de compresseur pour détecter une température d'aspiration du compresseur (2) ;
un capteur (59) de température d'entrée de module de chauffage à nanotubes de carbone pour détecter une température d'entrée du module de chauffage à nanotubes de carbone (50),
dans lequel le dispositif de commande (100) ajuste un degré d'ouverture du deuxième dispositif de détente (60) de sorte qu'une différence entre une température d'aspiration du compresseur (2) et une température d'entrée du module de chauffage à nanotubes de carbone (50) atteigne une température de surchauffe d'aspiration cible.

9. Climatiseur de la revendication 8, dans lequel le dispositif de commande (100) ajuste un degré d'ouverture du deuxième dispositif de détente (60) à une durée de réglage de changement d'ouverture de deuxième dispositif de détente.

10. Climatiseur de la revendication 1, dans lequel le dispositif de commande (100) détermine le nombre de mises en marche de la pluralité de dispositifs de chauffage à nanotubes de carbone (52)(53)(54) à une durée de réglage de changement de module de chauffage à nanotubes de carbone.
